# FASCICULE DE BREVET EUROPEEN

(11) **EP 2 694 412 B1**
(45) Date de publication et mention de la délivrance du brevet: **31.07.2019**
(21) Numéro de dépôt: 12709122.1
(22) Date de dépôt: 19.03.2012
(51) Int. Cl.: B65H 1/06, B65H 3/06, B65H 5/26

(54) **IMPRIMANTE AVEC CHARGEUR DE CARTES**
DRUCKER MIT KARTENLADER
PRINTER WITH CARD LOADER

(30) Priorité: 04.04.2011 FR 1152854
(43) Date de publication de la demande: 12.02.2014
(73) Titulaire: Evolis, 49070 Beaucouze (FR)
(72) Inventeur: BERTHAUD, Emmanuel, F-49070 Beaucouze (FR); MOREAU, Ludovic, F-49070 Beaucouze (FR)
(74) Mandataire: Cabinet Le Guen Maillet
(86) Numéro de dépôt international: PCT/EP2012/054811
(87) Numéro de publication internationale: WO 2012/136469

(56) Documents cités:
- WO-A1-03/076200
- WO-A1-2009/048505
- WO-A1-2011/035138
- WO-A2-02/01493

## Description

La présente invention concerne un dispositif chargeur de cartes destiné à être fixé à une imprimante, et à alimenter l'imprimante en cartes. La présente invention s'applique notamment dans le domaine de l'impression thermique de cartes plastiques.

Il est connu des imprimantes dotées d'un chargeur de cartes à imprimer et d'un réceptacle destiné à recevoir des cartes imprimées. De telles imprimantes effectuent des opérations de manipulation des cartes pendant l'impression. Par exemple, ces imprimantes sont adaptées pour effectuer un encodage magnétique sur les cartes et pour imprimer des images et du texte sur ces cartes. On considère que l'encodage magnétique, ou toute opération visant à appliquer un traitement sur les cartes par l'imprimante, est une opération d'impression.

De telles opérations nécessitent un mouvement relatif, notamment en translation, entre les cartes et le(s) module(s) de l'imprimante exécutant ces opérations. Le chargeur et/ou le réceptacle étant disposés de manière juxtaposée avec l'espace requis pour cette manipulation des cartes par l'imprimante, l'encombrement de ces imprimantes est relativement grand.

Le document WO-A-2011/035138 divulgue une imprimante selon le préambule de la revendication 1.

Il est souhaitable de pallier ces différents inconvénients de l'état de la technique.

Il est notamment souhaitable de fournir une solution qui permette de réduire l'encombrement d'un ensemble imprimante / chargeur de cartes par rapport aux solutions de l'état de la technique.

Il est notamment souhaitable de fournir une solution qui permette de réduire un tel encombrement lorsque plusieurs chargeurs de cartes sont utilisés pour alimenter l'imprimante en cartes à imprimer.

Il est notamment souhaitable de fournir une solution qui facilite le montage d'un tel chargeur de cartes sur l'imprimante.

Il est notamment souhaitable de fournir une telle solution qui soit adaptée pour fournir des cartes à imprimer à l'imprimante et recevoir, dans un réceptacle, des cartes imprimées par l'imprimante.

Il est notamment souhaitable de fournir une solution qui soit simple à mettre en oeuvre et qui soit efficace en termes de coût.

L'invention concerne une imprimante selon la revendication 1.

Ainsi, l'encombrement de l'ensemble imprimante / chargeur de cartes est réduit par rapport aux solutions de l'état de la technique. En effet, les déplacements de dispositif d'entraînement libèrent des espaces qui sont utilisés soit par un autre dispositif de chargement que celui concerné par le dispositif d'entraînement déplacé, soit par l'imprimante pour manipuler des cartes. Le chargeur et/ou l'imprimante sont donc plus compacts. En effet, les dimensions de l'imprimante peuvent ainsi être réduites d'un volume égal à l'espace libéré dans le chargeur par déplacement du dispositif d'entraînement.

Le chargeur de cartes comprend : un premier dispositif de chargement destiné à stocker une pluralité de cartes à imprimer ; un second dispositif de chargement destiné à recevoir, une à une, des cartes à imprimer ; un premier dispositif d'entraînement permettant de transférer des cartes à imprimer du premier dispositif de chargement vers ladite imprimante ; un second dispositif d'entraînement permettant de transférer des cartes à imprimer du second dispositif de chargement vers ladite imprimante. Le chargeur de cartes est tel que les premier et second dispositifs d'entraînement sont déplaçables pour permettre à l'imprimante, pour manipuler une carte à imprimer lors d'une opération effectuée par ladite imprimante, d'utiliser lesdits espaces occupés par les premier et second dispositifs d'entraînement.

Ainsi, dans une configuration à deux modes de chargement de cartes, l'encombrement de l'imprimante est réduit.

Selon un mode de réalisation particulier, le chargeur de cartes comprend : un premier dispositif de chargement destiné à stocker une pluralité de cartes à imprimer ; un second dispositif de chargement destiné à recevoir, une à une, des cartes à imprimer ; un premier dispositif d'entraînement permettant de transférer des cartes à imprimer du premier dispositif de chargement vers ladite imprimante ; un second dispositif d'entraînement permettant de transférer des cartes à imprimer du second dispositif de chargement vers ladite imprimante. Le chargeur de cartes est tel que le premier ou le second dispositif d'entraînement est déplaçable pour permettre à l'autre dispositif d'entraînement d'utiliser ledit espace qui est occupé par le premier ou respectivement le second dispositif d'entraînement pour transférer une carte à imprimer vers l'imprimante.

Ainsi, dans une configuration à deux modes de chargement de cartes, l'encombrement du chargeur est réduit.

Selon un mode de réalisation particulier, les premier et second dispositifs de chargement sont substantiellement superposés.

Ainsi, le gain en encombrement est accru.

Selon un mode de réalisation particulier, les premier et second dispositifs d'entraînement sont des rouleaux.

Selon un mode de réalisation particulier, le premier dispositif d'entraînement est un rouleau : positionnable dans une première position, dans laquelle le premier dispositif d'entraînement est mis en rotation pour transférer une carte à imprimer du premier dispositif de chargement vers l'imprimante ; et, positionnable dans une seconde position, dans laquelle le premier dispositif d'entraînement écarte les cartes à imprimer, stockées dans le premier dispositif de chargement, d'un chemin de transfert de carte.

Selon un mode de réalisation particulier, le second dispositif d'entraînement est un rouleau associé à au moins un autre rouleau et est : positionnable dans une première position, dans laquelle le second dispositif d'entraînement est mis en rotation et est couplé audit ou auxdits autres(s) rouleau(x) pour transférer une carte à imprimer du second dispositif de chargement vers ladite imprimante ; et, positionnable dans une seconde position, dans laquelle le second dispositif d'entraînement est découplé dudit ou desdits autres(s) rouleau(x).

Selon un mode de réalisation particulier, le chargeur de cartes est tel qu'il comprend en outre un dispositif réceptacle destiné à recevoir des cartes imprimées par l'imprimante, et en ce que le(s) dispositif(s) d'entraînement déplaçable(s) est(sont) déplaçable(s) pour permettre à l'imprimante de transférer des cartes imprimées vers le dispositif réceptacle.

Selon un mode de réalisation particulier, le dispositif réceptacle est superposé au(x)dit(s) dispositif(s) de chargement.

Ainsi, le gain en encombrement est accru.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre une imprimante dotée d'un chargeur de cartes, selon un mode de réalisation de la présente invention ;
- la Fig. 2 illustre le chargeur de cartes, selon une vue en perspective ;
- les Figs. 3a, 3b et 3c illustrent différentes positions prises par des dispositifs d'entraînement du chargeur de cartes ;
- la Fig. 4 illustre, en vue en coupe, le chargeur de cartes, lorsqu'il fournit à l'imprimante une carte à imprimer depuis un premier dispositif de chargement de cartes ;
- la Fig. 5 illustre, en vue en coupe, le chargeur de cartes, lorsqu'il fournit à l'imprimante une carte à imprimer depuis un second dispositif de chargement de cartes ;
- la Fig. 6 illustre, en vue en coupe, un module d'impression de l'imprimante et le chargeur de cartes, lorsque le module d'impression effectue une opération de manipulation de carte ;
- la Fig. 7 illustre, en vue en coupe, le module d'impression de l'imprimante et le chargeur de cartes, lorsque l'imprimante transfère une carte imprimée vers un réceptacle du chargeur de cartes.

De manière à réduire l'encombrement d'un ensemble constitué d'une imprimante et d'un chargeur destiné à alimenter l'imprimante en cartes à imprimer, il est proposé de mettre en oeuvre des dispositifs d'entraînement de cartes qui soient déplaçables. En effet, de manière à alimenter l'imprimante en cartes à imprimer, le chargeur dispose de dispositifs d'entraînement, tels que des rouleaux, pour permettre de transférer les cartes à imprimer vers l'imprimante. Il est donc proposé que ces dispositifs d'entraînement soient déplaçables de manière à permettre à l'imprimante d'utiliser, pour manipuler une carte à imprimer, un espace qui est occupé par ces dispositifs d'entraînement lorsqu'ils transfèrent une carte à imprimer vers l'imprimante.

De la même manière, lorsque le chargeur dispose de plusieurs dispositifs de chargement, le déplacement des dispositifs d'entraînement associés à l'un de ces dispositifs de chargement permet à l'autre d'utiliser l'espace libéré pour transférer une carte à imprimer vers l'imprimante.

De tels déplacements adaptés des dispositifs d'entraînement peuvent permettre en outre de réduire l'encombrement lié au transfert, par l'imprimante, d'une carte imprimée vers un réceptacle du chargeur de cartes.

Grâce au déplacement de ces dispositifs d'entraînement de manière adaptée au fil du chargement et de l'impression de la carte, l'encombrement de l'ensemble imprimante / chargeur de cartes est réduit.

Ce principe va être détaillé ci-après pour un mode de réalisation de l'invention, d'autres agencements étant possibles sans sortir du cadre de la présente invention.

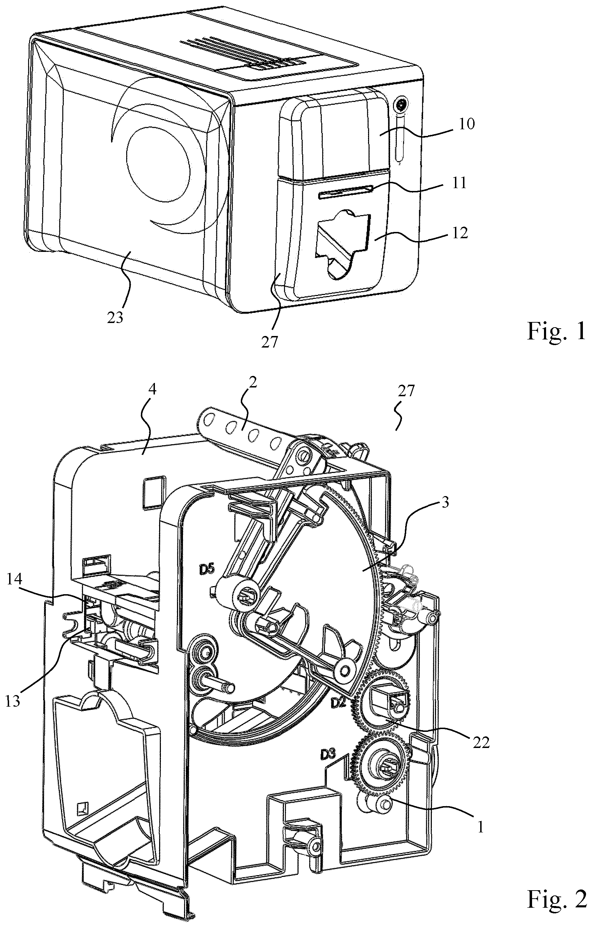

La Fig. 1 illustre une imprimante 23 thermique pour cartes plastiques, dotée d'un chargeur de cartes 27. Le chargeur de cartes 27 comporte au moins un premier dispositif 10 de chargement de cartes. Dans un mode de réalisation particulier, le chargeur de cartes 27 comporte un second dispositif 11 de chargement de cartes.

Comme montré sur la Fig. 1, le premier dispositif 10 de chargement de cartes est destiné à stocker une pluralité de cartes à imprimer. Les cartes à imprimer sont ainsi empilées dans le premier dispositif 10 de chargement de cartes. En outre, le second dispositif 11 de chargement de cartes est destiné à recevoir, une à une, des cartes à imprimer.

Préférentiellement, les premier 10 et second 11 dispositifs de chargement sont substantiellement superposés.

Préférentiellement, comme montré sur la Fig. 1, le chargeur de cartes 27 comporte un dispositif réceptacle 12 destiné à recevoir des cartes imprimées par l'imprimante 23. Préférentiellement, le dispositif réceptacle 12 est superposé aux premier 10 et second 11 dispositifs de chargement.

Ainsi, un utilisateur de l'imprimante 23 peut soit effectuer une impression en utilisant une carte stockée dans le premier dispositif 10 de chargement de cartes, soit effectuer une impression en utilisant une carte qu'il introduit, au moyen d'une fente, dans le second dispositif 11 de chargement de cartes. L'utilisateur récupère ensuite la carte imprimée par le biais d'une ouverture pratiquée dans le dispositif réceptacle 12. Lorsque une carte à imprimer a été introduite dans une fente du second dispositif 11 de chargement, le chargeur de cartes 27 peut être adapté pour que cette carte, après impression par l'imprimante 23, puisse être récupérée via cette fente.

La Fig. 2 illustre le chargeur de cartes 27, selon une vue en perspective.

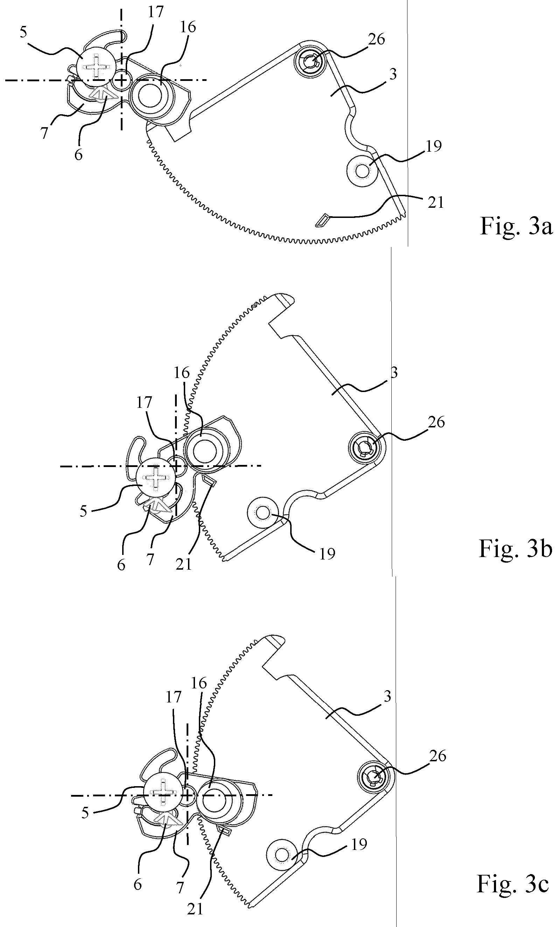

Le chargeur de cartes 27 comporte divers éléments montés dans un châssis 4. Le chargeur de cartes 27 comporte notamment un dispositif sélectionneur 3. Le dispositif sélectionneur 3 permet de mettre des premier 16 et second 19 dispositifs d'entraînement (non représentés sur la Fig. 2) dans des positions prédéterminées en fonction de l'opération d'impression ou de chargement en cours, comme détaillé ci-après en relation avec les Figs. 3a, 3b et 3c. Le premier dispositif d'entraînement 16 est associé au premier dispositif de chargement 10 et permet de transférer des cartes à imprimer du premier dispositif 10 de chargement vers l'imprimante 23. Le second dispositif d'entraînement 19 est associé au second dispositif de chargement 11 et permet de transférer des cartes à imprimer du second dispositif 11 de chargement vers l'imprimante 23. Les premier 16 et second 19 dispositifs d'entraînement sont préférentiellement des rouleaux.

Le chargeur de cartes 27 comporte en outre un moteur 1 adapté pour entraîner en rotation le dispositif sélectionneur 3 pour permettre de passer les dispositifs d'entraînement 16 et 19 d'une position prédéterminée à une autre. Le moteur 1 peut entraîner le dispositif sélectionneur 3 par l'intermédiaire de roues dentées 22. Le moteur 1 est préférentiellement un moteur pas à pas, ce qui permet de placer avec précision le dispositif sélectionneur 3 dans des positions prédéterminées. La présence dans le chargeur de cartes 27 de ce moteur 1, ainsi que d'au moins un moteur de transport (non représenté) permettant de mettre en action les premier 16 et second 19 dispositifs d'entraînement, permet que le chargeur fonctionne de manière autonome par rapport à l'imprimante 23. L'assemblage du chargeur de cartes 27 et de l'imprimante 23 est ainsi facilité.

D'autres agencements sont possibles pour permettre de passer les dispositifs d'entraînement 16 et 19 d'une position prédéterminée à une autre, notamment par mise en oeuvre de mouvements de translation.

Les premier 10 et second 11 dispositifs de chargement peuvent être équipés de capteurs respectifs 14 et 13 de présence de carte. Le capteur 13 de présence de carte permet de détecter qu'une carte à imprimer est introduite dans le second dispositif 11 de chargement, et le capteur 14 de présence de carte permet de détecter qu'au moins une carte à imprimer est stockée dans le premier dispositif 10 de chargement.

Le chargeur de cartes 27 peut en outre comporter un dispositif de nettoyage de carte, ainsi qu'une jauge d'épaisseur de carte pour permettre de réaliser des impressions sur des cartes de différentes épaisseurs.

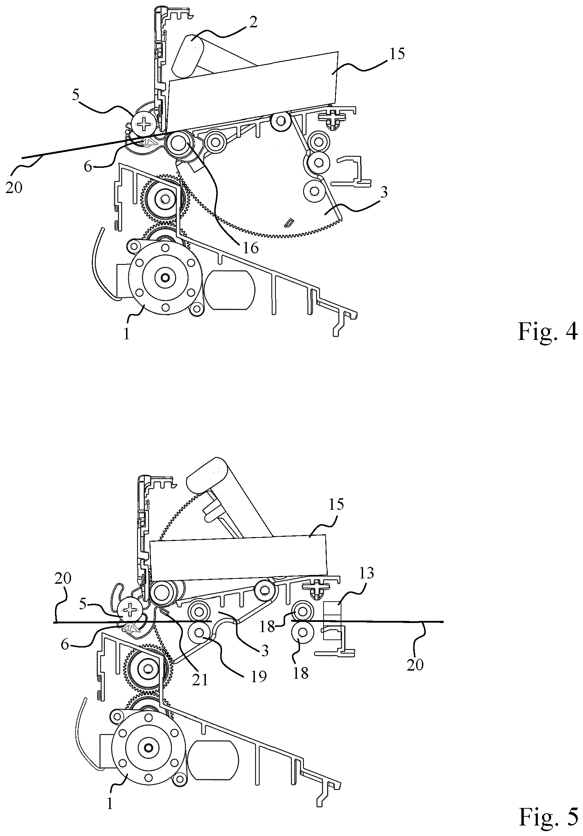

Comme montré sur la Fig. 2, le premier dispositif de chargement 10 comporte un poids 2, dont le mouvement est décrit ci-après en relation avec les Figs. 4 à 7.

Les Figs. 3a, 3b et 3c illustrent différentes positions prises par les dispositifs d'entraînement 16 et 19 par action du dispositif sélectionneur 3. Tel que représenté sur les Figs. 3a, 3b et 3c, le dispositif d'entraînement 19 est monté sur le dispositif sélectionneur 3. Ainsi, lorsque le dispositif sélectionneur 3 est mis en rotation autour d'un axe 26, un déplacement du dispositif d'entraînement 19 s'opère.

Le dispositif sélectionneur 3, par action du moteur 1, permet de passer les dispositifs d'entraînement 16 et 19 dans les positions prédéterminées suivantes :
- une première position, telle que représentée sur la Fig. 3a, dans laquelle les dispositifs d'entraînement 16 et 19 sont positionnés de manière à permettre de transférer une carte à imprimer du premier dispositif de chargement 10 vers l'imprimante 23 ;
- une seconde position, telle que représentée sur la Fig. 3b, dans laquelle les dispositifs d'entraînement 16 et 19 sont positionnés de manière à permettre de transférer une carte à imprimer du second dispositif de chargement 11 vers l'imprimante 23 ; et
- une troisième position, telle que représentée sur la Fig. 3c, dans laquelle les dispositifs d'entraînement 16 et 19 sont positionnés de manière à permettre à l'imprimante 23 d'utiliser un espace qui est occupé par le dispositif d'entraînement 16 et/ou le dispositif d'entraînement 19 dans les première et seconde positions, c'est-à-dire l'espace occupé par ces dispositifs d'entraînement 16 et 19 lors d'un transfert de carte à imprimer vers l'imprimante 23.

Dans le mode de réalisation détaillé ci-après, la première position, telle que représentée sur la Fig. 3a, est en outre une position dans laquelle les dispositifs d'entraînement 16 et 19 sont positionnés de manière à permettre à l'imprimante 23 de transférer une carte imprimée vers le dispositif réceptacle 12. Dans une variante de réalisation, une quatrième position peut être définie, dans laquelle les dispositifs d'entraînement 16 et 19 sont spécifiquement positionnés de manière à permettre à l'imprimante 23 de transférer cette carte imprimée vers le dispositif réceptacle 12.

Le dispositif sélectionneur 3 comporte une entité de pilotage 21 permettant de mettre en rotation un levier d'aiguillage 7, sur lequel est monté le premier dispositif d'entraînement 16, autour d'un axe 17.

Dans la première position, telle que représentée par la Fig. 3a, l'entité de pilotage 21 n'est pas en contact avec le levier d'aiguillage 7. Le levier d'aiguillage 7 est donc en position basse, par gravité, et maintenu en position par une butée (non représentée). Dans la seconde position, telle que représentée par la Fig. 3b, l'entité de pilotage 21 est en contact avec le levier d'aiguillage 7. Le levier d'aiguillage 7 est donc en position haute et maintenu en position par la pression exercée par l'entité de pilotage 21. Dans la troisième position, telle que représentée par la Fig. 3c, l'entité de pilotage 21 est aussi en contact avec le levier d'aiguillage 7. Le levier d'aiguillage 7 est cependant dans une position intermédiaire et est maintenu en position par la pression exercée par l'entité de pilotage 21.

L'interaction du dispositif sélectionneur 3 et des autres éléments du chargeur de cartes 27, pour permettre de placer les dispositifs d'entraînement 16 et 19 dans les positions mentionnées ci-dessus, est décrite ci-après en relation avec les Figs. 4 à 7.

La Fig. 4 illustre, en vue en coupe, le chargeur de cartes 27, lorsqu'il fournit à l'imprimante 23 une carte à imprimer depuis le premier dispositif 10 de chargement. Le moteur 1 entraîne alors le dispositif sélectionneur 3 pour atteindre la position représentée sur la Fig. 3a.

Dans ce mode de fonctionnement du chargeur 27, le dispositif sélectionneur 3 est mis en position basse par action du moteur 1 et rotation autour de l'axe 26. Le levier d'aiguillage 7 pivote autour de l'axe 17. Un rouleau de nettoyage 5 et un axe d'aiguillage 6 de carte sont aussi disposés sur le levier d'aiguillage 7, en contrepoids du premier dispositif d'entraînement 16 par rapport à l'axe 17, le premier dispositif d'entraînement 16 étant plus lourd que l'ensemble formé par le rouleau de nettoyage 5 et l'axe d'aiguillage 6.

Lorsque le dispositif sélectionneur 3 est amené en position basse, l'entité de pilotage 21 relâche la pression sur le levier d'aiguillage 7. Ainsi, le premier dispositif d'entraînement 16 descend et l'ensemble formé par le rouleau de nettoyage 5 et l'axe d'aiguillage 6 monte, par rotation autour de l'axe 17. Dans une variante de réalisation, un tel mouvement de rappel peut être réalisé à l'aide d'un élément élastique, tel qu'un ressort.

De plus, lors de la rotation du dispositif sélectionneur 3 vers le bas, le poids 2 met en pression un paquet de cartes 15 stockées par le premier dispositif 10 de chargement, pour une meilleure adhérence sur le premier dispositif d'entraînement 16. Dans les autres positions du dispositif sélectionneur 3, telles que représentées sur les Figs. 3b et 3c, le poids 2 est relevé. Dans ces positions, le dispositif sélectionneur 3 exerce une pression sur un bras supportant le poids 2, ce qui a pour effet de soulever le poids 2 du paquet de cartes 15. Dans une variante de réalisation, le poids 2 peut être remplacé par un levier exerçant une pression sur le paquet de cartes 15 à l'aide d'un mécanisme élastique, tel qu'un ressort.

La carte à imprimer, placée sur le dessous du paquet de cartes 15, se trouve alors en face d'une ouverture réglée par la jauge d'épaisseur de carte. Le premier dispositif d'entraînement 16 est ensuite mis en rotation par un moteur de transport de carte (non représenté). La carte à imprimer 20 est mise en mouvement afin d'être transférer vers l'imprimante 23. Cette carte à imprimer 20 passe entre le rouleau de nettoyage 5 et l'axe d'aiguillage 6 pour être nettoyée. Avant que la carte à imprimer 20 n'ait complètement quitté le premier dispositif d'entraînement 16, elle est prise par le système de transport de l'imprimante 23 qui continue de la faire avancer jusqu'à ce qu'elle quitte le chargeur de cartes 27. L'opération de chargement est alors terminée.

La Fig. 5 illustre, en vue en coupe, le chargeur de cartes 27, lorsqu'il fournit à l'imprimante 23 une carte à imprimer depuis le second dispositif 11 de chargement. Le moteur 1 entraîne alors le dispositif sélectionneur 3 pour atteindre la position représentée sur la Fig. 3b.

Le dispositif sélectionneur 3 est mis en position haute par action du moteur 1 et rotation autour de l'axe 26. L'entité de pilotage 21 prend alors appui sur le levier d'aiguillage 7 et le force à basculer autour de l'axe 17. Ainsi, le premier dispositif d'entraînement 16 monte et l'ensemble formé par le rouleau de nettoyage 5 et l'axe d'aiguillage 6 descend pour se placer sur le chemin de transfert de carte utilisé pour transférer une carte depuis le second dispositif 11 de chargement vers l'imprimante 23. Le paquet de cartes 15 est alors soulevé par le premier dispositif d'entraînement 16, de manière à s'écarter du chemin de transfert de carte utilisé pour transférer une carte depuis le second dispositif 11 de chargement vers l'imprimante 23. Un tel agencement peut aussi être utilisé pour écarter le paquet de cartes 15 du chemin de transfert de carte utilisé par l'imprimante 23 lors d'une opération d'impression ou lors d'un transfert d'une carte imprimée vers le dispositif réceptacle 12.

Ainsi, le premier dispositif d'entraînement 16 est déplaçable pour permettre au second dispositif d'entraînement 19 d'utiliser l'espace qui est normalement occupé par le premier dispositif d'entraînement 16 pour transférer une carte à imprimer 20 vers l'imprimante 23. Le transfert de la carte à imprimer peut alors s'effectuer via cet espace libéré par déplacement du premier dispositif d'entraînement 16.

Le déplacement du dispositif sélectionneur 3 place le second dispositif d'entraînement 19, qui est un rouleau dans le mode de réalisation détaillé, en pression contre un autre rouleau 18 qui lui correspond pour assurer le transport de la carte à imprimer. D'autres rouleaux 18 peuvent être utilisés en complément. Le second dispositif d'entraînement 19 est ainsi couplé à au moins un autre rouleau 18, contrairement aux positions des Figs. 3a et 3c dans lesquelles il en est découplé.

Le second dispositif d'entraînement 19 est ensuite mis en rotation par un moteur de transport de carte (non représenté). La carte à imprimer 20 est mise en mouvement afin d'être transférée vers l'imprimante 23 grâce à l'ensemble formé par les rouleaux de transport 18 et 19. Avant que la carte à imprimer 20 n'ait complètement quitté le second dispositif d'entraînement 19, elle est prise par le système de transport de l'imprimante 23 qui continue de la faire avancer jusqu'à ce qu'elle quitte le chargeur de cartes 27. L'opération de chargement est alors terminée.

Cette position du dispositif sélectionneur 3, et des premier 16 et second 19 dispositifs d'entraînement peut être utilisée pour transférer une carte imprimée depuis l'imprimante 23 vers le second dispositif 11 de chargement. Le sens de rotation des rouleaux de transport 18 et 19 est alors inversé. L'utilisateur peut ainsi récupérer la carte imprimée via la fente précédemment utilisée pour l'introduire.

D'autres agencements sont possibles dans lesquels le second dispositif d'entraînement 19 est déplaçable pour permettre au premier dispositif d'entraînement 16 d'utiliser l'espace qui est normalement occupé par le second dispositif d'entraînement 19 pour transférer une carte à imprimer 20 vers l'imprimante 23. Le transfert de la carte à imprimer peut alors s'effectuer via cet espace libéré par déplacement du second dispositif d'entraînement 19.

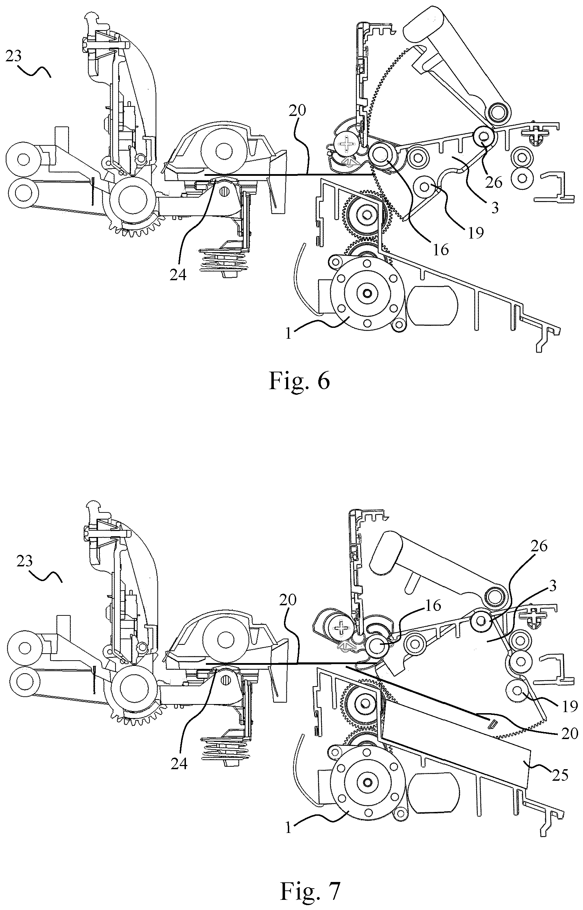

La Fig. 6 illustre, en vue en coupe, un module d'impression de l'imprimante et le chargeur de cartes 27, lorsque le module d'impression effectue une opération de manipulation de carte. Le moteur 1 entraîne alors le dispositif sélectionneur 3 pour atteindre la position représentée sur la Fig. 3c. Un tel module d'impression comporte par exemple une tête magnétique 24 permettant d'effectuer un encodage magnétique.

Le dispositif sélectionneur 3 est mis en position intermédiaire par action du moteur 1 et rotation autour de l'axe 26. L'entité de pilotage 21 prend alors appui sur le levier d'aiguillage 7 et le force à basculer autour de l'axe 17. Le premier dispositif d'entraînement 16 et l'ensemble formé par le rouleau de nettoyage 5 et l'axe d'aiguillage 6 sont déplacés pour permettre à la carte en cours de manipulation par l'imprimante 23 de pénétrer le chargeur de cartes 27 sans heurter d'élément, évitant ainsi d'éventuels défauts de carte imprimée qui pourraient être liés à des chocs lors du transport de la carte.

Ainsi, le premier dispositif d'entraînement 16 est déplaçable pour permettre à l'imprimante 23 d'utiliser, pour manipuler la carte, l'espace qui est normalement occupé par le premier dispositif d'entraînement 16 pour transférer une carte à imprimer 20 vers l'imprimante 23. Un tel agencement permet de réduire significativement l'encombrement de l'imprimante 23.

D'autres agencements sont possibles dans lesquels le second dispositif d'entraînement 19 est déplaçable pour permettre à l'imprimante 23 d'utiliser, pour manipuler la carte, l'espace qui est normalement occupé par le second dispositif d'entraînement 19 pour transférer une carte à imprimer 20 vers l'imprimante 23.

La Fig. 7 illustre, en vue en coupe, le module d'impression de l'imprimante et le chargeur de cartes 27, lorsque l'imprimante transfère une carte imprimée 20 vers le dispositif réceptacle 12. Le moteur 1 entraîne alors le dispositif sélectionneur 3 pour atteindre la position représentée sur la Fig. 3a.

Dans cette configuration, l'imprimante 20 effectue une manipulation de la carte imprimée 20 de manière à la transférer vers le dispositif réceptacle 12.

Les premier 16 et second 19 dispositifs d'entraînement sont positionnés pour permettre à l'imprimante 23 d'utiliser l'espace qui est normalement occupé par les premier 16 et second 19 dispositifs d'entraînement 16 pour transférer une carte à imprimer 20 vers l'imprimante 23.

La carte imprimée 20, lorsqu'elle quitte le dernier rouleau du module d'impression de l'imprimante 23, chute dans le dispositif réceptacle 12 et vient se poser au-dessus d'un paquet 25 de cartes imprimées.

Tout autre module de traitement de carte peut être mis en oeuvre par l'imprimante 23 en lieu et place du module d'impression.

## Revendications

1. Imprimante (23) comportant:
- un module de traitement de cartes adapté pour effectuer une opération de traitement sur une carte à imprimer,
- un chargeur (27) de cartes comprenant un premier dispositif de chargement (10) destiné à stocker une pluralité de cartes à imprimer, un premier dispositif d'entraînement (16) permettant de transférer des cartes à imprimer du premier dispositif de chargement vers ledit module de traitement, ledit premier dispositif d'entraînement (16) étant déplaçable entre une première position dans laquelle ledit dispositif d'entraînement (16) transfère une carte à imprimer vers le module de traitement, et une autre position dans laquelle le module de traitement manipule la carte à imprimer en utilisant un espace qui est occupé par ledit premier dispositif d'entraînement (16) lorsqu'il est dans la première position,
l'imprimante étant **caractérisée en ce qu'**elle comporte un second dispositif de chargement (11) destiné à recevoir, une à une, des cartes à imprimer, et un second dispositif d'entraînement (19) permettant de transférer des cartes à imprimer du second dispositif de chargement vers ledit module de traitement et **en ce que** les premier (16) et second (19) dispositifs d'entraînement sont déplaçables entre une première position dans laquelle les premier (16) et second (19) dispositifs d'entraînement (16, 19) transfèrent une carte à imprimer vers le module de traitement, et une autre position dans laquelle le module de traitement manipule la carte lors d'une opération effectuée par ledit module de traitement en utilisant lesdits espaces occupés par les premier (16) et second (19) dispositifs d'entraînement dans la première position.

2. Imprimante (23) selon la revendication 1, **caractérisée en ce que** les premier et second dispositifs de chargement sont substantiellement superposés.

3. Imprimante (23) selon l'une des revendications 1 ou 2, **caractérisée en ce que** les premier et second dispositifs d'entraînement sont des rouleaux, où le premier dispositif d'entraînement (16) est un rouleau :
- positionnable dans une première position, dans laquelle le rouleau (16) est mis en rotation pour transférer une carte à imprimer du premier dispositif de chargement (10) vers le module de traitement le long d'un chemin de transfert, et
- positionnable dans une seconde position, dans laquelle le premier dispositif d'entraînement (16) écarte les cartes à imprimer (15), stockées dans le premier dispositif de chargement (10), du chemin de transfert de carte.

4. Imprimante (23) selon l'une des revendications 1 à 3, **caractérisée en ce que** le second dispositif d'entraînement (19) est un rouleau associé à au moins un autre rouleau (18) et :
- positionnable dans une première position, dans laquelle ledit rouleau (19) est mis en rotation et est couplé audit ou auxdits autres(s) rouleau(x) (18) pour transférer une carte à imprimer du second dispositif de chargement (11) vers le module de traitement,
- positionnable dans une seconde position, dans laquelle le second dispositif d'entraînement (19) est découplé dudit ou desdits autres(s) rouleau(x) (18).

5. Imprimante (23) selon l'une des revendications 1 à 4, **caractérisée en ce qu'**elle comprend en outre un dispositif réceptacle (12) destiné à recevoir des cartes imprimées (25) par l'imprimante, et **en ce que** le(s) dispositif(s) d'entraînement (16;19) déplaçable(s) est(sont) déplaçable(s) pour permettre à l'imprimante (23) de transférer des cartes imprimées vers le dispositif réceptacle (12) en utilisant ledit espace occupé par le(s)dit(s) dispositif(s) d'entraînement (16;19) lorsque le(s)dit(s) dispositif(s) d'entraînement (16;19) transfère(nt) une carte à imprimer vers l'imprimante.

6. Imprimante (23) selon la revendication 5, **caractérisée en ce que** le dispositif réceptacle (12) est superposé au(x)dit(s) dispositif(s) de chargement (10;11).

## Patentansprüche

1. Drucker (23), umfassend:
- ein Kartenbearbeitungsmodul, das geeignet ist, einen Bearbeitungsvorgang an einer zu bedruckenden Karte durchzuführen,
- einen Kartenlader (27), umfassend eine erste Ladevorrichtung (10), die dazu bestimmt ist, eine Vielzahl von zu bedruckenden Karten zu speichern, wobei eine erste Antriebsvorrichtung (16) es ermöglicht, zu bedruckende Karten von der ersten Ladevorrichtung zum Bearbeitungsmodul zu transferieren, wobei die erste Antriebsvorrichtung (16) verlagerbar ist zwischen einer ersten Position, in der die Antriebsvorrichtung (16) eine zu bedruckende Karte zum Bearbeitungsmodul transferiert, und einer weiteren Position, in der das Bearbeitungsmodul die zu bedruckende Karte handhabt, wobei sie einen Raum nutzt, der von der ersten Antriebsvorrichtung (16) eingenommen wird, wenn sie in der ersten Position ist,
wobei der Drucker **dadurch gekennzeichnet ist, dass** er eine zweite Ladevorrichtung (11) umfasst, die dazu bestimmt ist, zu bedruckende Karten einzeln aufzunehmen, und eine zweite Antriebsvorrichtung (19), die es ermöglicht, zu bedruckende Karten von der zweiten Ladevorrichtung zum Bearbeitungsmodul zu transferieren, und dass die erste (16) und zweite (19) Antriebsvorrichtung verlagerbar sind zwischen einer ersten Position, in der die erste (16) und zweite (19) Antriebsvorrichtung (16, 19) eine zu bedruckende Karte zum Bearbeitungsmodul transferieren, und einer weiteren Position, in der das Bearbeitungsmodul die Karte bei einem Vorgang, der von dem Bearbeitungsmodul durchgeführt wird, handhabt, wobei es die Räume nutzt, die von der ersten (16) und zweiten (19) Antriebsvorrichtung in der ersten Position eingenommen werden.

2. Drucker (23) nach Anspruch 1, **dadurch gekennzeichnet, dass** die erste und zweite Ladevorrichtung im Wesentlichen übereinander liegen.

3. Drucker (23) nach einem der Ansprüche 1 oder 2, **dadurch gekennzeichnet, dass** die erste und zweite Antriebsvorrichtung Walzen sind, wobei die erste Antriebsvorrichtung (16) eine Walze ist:
- die sich in eine erste Position positionieren lässt, in der die Walze (16) in Drehung versetzt wird, um eine zu bedruckende Karte von der ersten Ladevorrichtung (10) entlang eines Transferweges zum Bearbeitungsmodul zu transferieren, und
- die sich in eine zweite Position positionieren lässt, in der die erste Antriebsvorrichtung (16) die zu bedruckenden Karten (15), die in der ersten Ladevorrichtung (10) gespeichert sind, vom Kartentransferweg beabstandet.

4. Drucker (23) nach einem der Ansprüche 1 bis 3, **dadurch gekennzeichnet, dass** die zweite Antriebsvorrichtung (19) eine Walze ist, die mindestens einer weiteren Walze (18) zugeordnet ist und:
- die sich in eine erste Position positionieren lässt, in der die Walze (19) in Drehung versetzt wird und mit der oder den weiteren Walze (n) (18) gekoppelt wird, um eine zu bedruckende Karte von der zweiten Ladevorrichtung (11) zum Bearbeitungsmodul zu transferieren,
- die sich in eine zweite Position positionieren lässt, in der die zweite Antriebsvorrichtung (19) von der oder den weiteren Walze(n) (18) entkoppelt ist.

5. Drucker (23) nach einem der Ansprüche 1 bis 4, **dadurch gekennzeichnet, dass** er ferner eine Aufnahmevorrichtung (12) umfasst, die dazu bestimmt ist, vom Drucker bedruckte Karten (25) aufzunehmen, und dass die verlagerbare(n) Antriebsvorrichtung(en) (16; 19) verlagerbar ist (sind), um dem Drucker (23) zu ermöglichen, bedruckte Karten zur Aufnahmevorrichtung (12) zu transferieren, indem er den Raum nutzt, der von der (den) Antriebsvorrichtung(en) (16; 19) eingenommen wird, wenn die Antriebsvorrichtung(en) (16; 19) eine zu bedruckende Karte zum Drucker transferiert (transferieren).

6. Drucker (23) nach Anspruch 5, **dadurch gekennzeichnet, dass** die Aufnahmevorrichtung (12) über der(den) Ladevorrichtung(en) (10; 11) liegt.

## Claims

1. Printer (23) comprising:
- a card processing module adapted to perform a processing operation on a card to be printed,
- a card loader (27) comprising a first loading device (10) intended to store a plurality of cards to be printed, a first driving device (16) for transferring cards to be printed from the first loading device to said processing module, said first driving device (16) being movable between a first position in which said driving device (16) transfers a card to be printed to the processing module, and another position in which the processing module manipulates the card to be printed using a space which is occupied by the first driving device (16) when it is in the first position,
the printer being **characterized in that** it comprises a second loading device (11) intended to receive, one by one, cards to be printed, and a second driving device (19) for transferring cards to be printed from the second loading device to said processing module and **in that** the first (16) and second (19) driving devices are movable between a first position in which the first (16) and second (19) driving devices (16, 19) transfer a card to be printed to the processing module, and another position in which the processing module manipulates the card during an operation performed by said processing module using spaces occupied by the first (16) and second (19) driving devices in the first position.

2. Printer (23) according to claim 1, **characterised in that** the first and second loading devices are substantially superimposed.

3. Printer (23) according to one of claims 1 or 2, **characterised in that** the first and second driving devices are rollers, where the first driving device (16) is a roller:
- able to be positioned in a first position, in which the roller (16) is rotated in order to transfer a card to be printed from the first loading device (10) to the processing module along a transfer path, and
- able to be positioned in a second position, in which the first driving device (16) moves the printed cards (15), stored in the first loading device (10), away from the card transfer path.

4. Printer (23) according to one of claims 1 to 3, **characterised in that** the second driving device (19) is a roller associated with at least one other roller (18) and:
- able to be positioned in a first position in which said roller (19) is rotated and is coupled to said other roller or rollers (18) in order to transfer a card to be printed from the second loading device (11) to the processing module,
- able to be positioned in a second position, in which the second driving device (19) is decoupled from said other roller or rollers (18).

5. Printer (23) according to one of claims 1 to 4, **characterised in that** it further comprises a receptacle device (12) intended to receive cards (25) printed by the printer, and **in that** the movable driving device or devices (16; 19) is or are movable to enable the printer (23) to transfer printed cards to the receptacle device (12) using said space occupied by said driving device or devices (16; 19) when said driving device or device(s) (16; 19) transfer(s) a card to be printed to the printer.

6. Printer (23) according to claim 5, **characterised in that** the receptacle device (12) is interposed on said loading device or devices (10; 11).
